# EUROPÄISCHE PATENTSCHRIFT

(11) **EP 3 273 085 B1**
(45) Veröffentlichungstag und Bekanntmachung des Hinweises auf die Patenterteilung: **20.02.2019**
(21) Anmeldenummer: 17179446.4
(22) Anmeldetag: 04.07.2017
(51) Int. Cl.: F16D 23/02, F16H 57/04, F16D 23/06, F16D 69/00

(54) **REIBRING UND MEHRFACHKEGEL-SYNCHRONSCHALTKUPPLUNG**
FRICTION RING AND MULTI-PIN SYNCHRONOUS CLUTCH
BAGUE DE FROTTEMENT ET EMBRAYAGE SYNCHRONISÉ MULTI-CÔNES

(30) Priorität: 20.07.2016 DE 102016113422
(43) Veröffentlichungstag der Anmeldung: 24.01.2018
(73) Patentinhaber: Magna PT B.V. & Co. KG, 74199 Untergruppenbach (DE)
(72) Erfinder: Hirsch, Klaus, 74360 Ilsfeld (DE); Dootz, Hans Burghard, 71067 Sindelfingen (DE); Neumann, Manfred, 74360 Ilsfeld (DE)
(74) Vertreter: Rausch, Gabriele

(56) Entgegenhaltungen:
- EP-A1- 0 460 513
- DE-B3-102009 012 961
- JP-A- 2007 177 986
- US-A- 5 038 628

## Beschreibung

Die vorliegende Erfindung betrifft einen Reibring für eine Mehrfachkegel-Synchronschaltkupplung zum Verbinden einer Welle mit einem drehbar an der Welle gelagerten Drehglied, wobei der Reibring einen vorzugsweise geschlossenen Reibringkörper aufweist, der eine Längsachse definiert und der in einer Drehrichtung mit der Welle oder mit dem Drehglied koppelbar ist, wobei der Reibringkörper an einem Umfangsabschnitt eine Reibring-Konusfläche aufweist, die dazu ausgebildet ist, mit einer Konusfläche eines weiteren Bauelementes in Reibeingriff zu treten, wobei die Reibring-Konusfläche unter einem Konusflächenwinkel in Bezug zu der Längsachse ausgerichtet ist.

Ferner betrifft die vorliegende Erfindung eine Mehrfachkegel-Synchronschaltkupplung zum Verbinden einer in einer Längsachse ausgerichteten Welle mit einem drehbar an der Welle gelagerten Drehglied, wobei die Mehrfachkegel-Synchronschaltkupplung einen Reibring der oben genannten Art aufweist.

Schließlich betrifft die vorliegende Erfindung eine Wellenanordnung mit einer in einer Längsachse ausgerichteten Welle, an der ein Drehglied drehbar gelagert ist, und mit einer Mehrfachkegel-Synchronschaltkupplung der oben bezeichneten Art, und zwar zum Verbinden der Welle mit dem Drehglied.

Mehrfachkegel-Synchronschaltkupplungen der oben bezeichneten Art werden insbesondere in Kraftfahrzeuggetrieben verwendet, die in Vorgelegebauweise ausgebildet sind. Hierbei sind Gangstufen eines solchen Kraftfahrzeuggetriebes in der Regel Radsätze zugeordnet, die jeweils ein Festrad und wenigstens ein Losrad aufweisen. Das Festrad ist mit einer Welle verbunden. Das Losrad ist drehbar an der anderen Welle verbunden, kann jedoch mittels einer Schaltkupplung mit der ihm zugeordneten Welle verbunden werden, um auf diese Weise einen Leistungsfluss formschlüssig zu schalten und eine zugeordnete Gangstufe einzulegen.

Schaltkupplungen der oben bezeichneten Art wirken generell formschlüssig und beinhalten in der Regel eine mit der Welle starr verbundene Führungsmuffe, die eine Axialverzahnung aufweist. Eine Schaltmuffe ist mit einer entsprechenden Axialverzahnung versehen, die in die Axialverzahnung der Führungsmuffe greift. An dem Losrad ist ein Kupplungskörper festgelegt, der ebenfalls eine Axialverzahnung aufweist. Durch Verschieben der Schaltmuffe in axialer Richtung können die Axialverzahnungen der Führungsmuffe, der Schaltmuffe und des Kupplungskörpers entweder formschlüssig miteinander verbunden werden, oder aber voneinander getrennt werden, um auf diese Weise die Schaltkupplung zu schließen oder zu öffnen bzw. um einen Gang einzulegen oder auszulegen.

Obgleich derartige Schaltkupplungen generell als rein formschlüssige realisiert sein können, bspw. in der Form von Klauenkupplungen, weisen moderne Kraftfahrzeuggetriebe in der Regel Synchronschaltkupplungen auf. Synchronschaltkupplungen beinhalten Synchronelemente, um vor Herstellen eines Formschlusses zwischen Welle und Losrad ein Angleichen der Drehzahlen zu ermöglichen, so dass Gangwechsel komfortabler durchgeführt werden können. In der Regel beinhalten derartige Synchronschaltkupplungen zudem einen Sperr-Synchronring, der einerseits mit einer Reibfläche zum Angleichen der Drehzahlen ausgebildet ist und andererseits eine Sperrverzahnung aufweist, die in axialer Richtung zwischen der Axialverzahnung der Führungsmuffe und der Axialverzahnung des Kupplungskörpers angeordnet ist. Der Synchronring ist mit der Führungsmuffe in Drehrichtung gekoppelt, und zwar derart, dass der Synchronring in Drehrichtung zwischen zwei Relativpositionen in Bezug auf die Führungsmuffe verdreht werden kann. In der einen relativen Drehposition gibt die Verzahnung des Synchronringes den Weg für die Axialverzahnung der Schaltmuffe frei, um ein Durchschalten zu ermöglichen. In der anderen relativen Drehposition sperrt die Verzahnung des Synchronringes den Weg für die Axialverzahnung der Schaltmuffe. Das Verdrehen erfolgt dabei aufgrund eines Reibeingriffes des Synchronringes mit einem weiteren Element der Synchron-Schaltkupplung. Erst dann, wenn sich die Drehzahlen weitgehend angeglichen haben, kann der Synchronring wieder in die Freigabeposition relativ zu der Führungsmuffe zurück gedreht werden, um ein Durchschalten zu ermöglichen.

Bei Synchron-Schaltkupplungen unterscheidet man zwischen einer sog. Einfachsynchronisierung, bei der eine Synchronring-Konusfläche direkt mit einer Kupplungskörper-Konusfläche des Kupplungskörpers in Eingriff steht, so dass ein einziger konischer Reibeingriff vorhanden ist. Man spricht auch von einer Monokegelsynchronisierung.

Bei einer Doppelkegelsynchronisierung ist ein Konusring in radialer Richtung zwischen dem Synchronring und einem mit dem Synchronring in Drehrichtung gekoppelten Reibring angeordnet, wobei der Konusring mit dem Kupplungskörper in Drehrichtung gekoppelt ist. Hierdurch entstehen zwei Konus-Reibeingriffe, was zu einer Verringerung der Schaltkraft führen kann.

Bei sog. Dreifachkonus-Synchronisierungen kann ein radial innerer Reibring, wie er auch aus einer Doppelkonus-Synchronisierung bekannt ist, über einen weiteren konischen Reibeingriff mit dem Kupplungskörper bzw. Drehgliedkonus (Schaltrad) in Eingriff stehen.

Ferner sind auch Vierfachkonus-Synchronisierungen möglich, wobei in diesem Fall zwei radial verschachtelte Ringe, von denen ein Ring als Konusring mit zwei konischen Reibflächen ausgebildet ist und von denen der zweite Ring als Reibring mit wenigstens einer Reibfläche ausgebildet ist, mit dem Synchronring in Drehrichtung gekoppelt sein können, wobei zwischen diesen dann zwei Konusringe angeordnet sind, die mit dem Kupplungskörper in Drehrichtung gekoppelt sind.

Die Konusflächen der beteiligten Reibelemente solcher Synchron-Schaltkupplungen sind häufig mit Reibbelägen versehen, die die hohen Reibkräfte und die damit einhergehenden hohen thermischen Belastungen aufnehmen können. Ferner ist es üblich, in dem Bereich dieses Reibeingriffes Fluid wie Getriebeöl zuzuführen, um die entstehende Wärme besser abführen zu können. Hierbei ist es auch bekannt, in dem Reibbelag Nuten und Rillen vorzusehen, um für eine gleichmäßige Verteilung eines Fluides über die Fläche des Reibbelages zu sorgen.

Aus dem Dokument DE 195 42 735 A1 ist eine Synchronisiereinrichtung bekannt, bei der zur Beölung von konischen Reibflächen von Gleichlaufringen diese mit Ausnehmungen versehen sind. Die Ausnehmungen an den Ringen sind radial durchgängig und besitzen so jeweils zwei Öffnungen, eine an der Reibfläche, eine andere zur Schmierölaufnahme.

Ein weiterer Reibring ist aus dem Dokument EP 0 521 843 A1 bekannt. Der aus diesem Dokument bekannte Reibring weist einen Ringkörper mit zwei konzentrischen, zylindrischen oder konischen Reibflächen auf, die einen Reibbelag tragen. Zur Vereinfachung der Herstellung und zur Verbesserung der Wirkung des Reibringes besteht der Reibkörper aus mindestens zwei separaten Segmenten, die im eingebauten Zustand des Reibringes relativ zueinander beweglich sind. Die Segmente können über die Breite verteilt durchgehende Bohrungen aufweisen, die einen Mediumaustausch zwischen Innen- und Außenkonusfläche erlauben.

Das Dokument DE 10 2006 059 868 A1 offenbart einen Synchronring, der durch Umformen hergestellt ist. An den radial einander gegenüberliegenden Reibflächen können Längsölnuten vorgesehen sein, die in Umfangsrichtung verlaufen. Ferner können in eine innere als auch in eine äußere Reibfläche Querölnuten eingebracht sein.

Das Dokument DE 10 2008 061 967 A1 offenbart eine Synchronisierungseinrichtung mit einem Außensynchronring und einem Innensynchronring, zwischen denen ein Reibring in Form eines Konusringes mit zwei radial gegenüberliegenden Reibflächen angeordnet ist. Die Reibflächen des Konusringes sollen in einem spitzen Winkel zueinander stehen. Zur besseren Schmiermittelabfuhr können Nuten am Reibring eingebracht sein.

Das Dokument EP 2 028 386 A1 offenbart einen Synchronring. Ein Reibbelag des Synchronringes erstreckt sich unter einem vorgebbaren Reibwinkel konisch um eine Synchronringachse. Im Reibbelag ist zur Aufnahme und/oder zum Transport eines Fluids eine makrogeometrische Nut vorgesehen, derart, dass für das Fluid eine Strömungsverbindung zwischen einer ersten axialen Begrenzungsfläche und einer zweiten axialen Begrenzungsfläche des Reibbelages geschaffen ist. Im Bereich der makrogeometrischen Nut soll der Reibbelag vollständig entfernt werden. Die makrogeometrische Nut kann sich ferner schräg unter einem Neigungswinkel zur Synchronringachse erstrecken.
Das Dokument WO 2008/107315 A2 offenbart einen Kupplungskörper und einen Synchronring einer Synchronisierungseinrichtung. Eine Reibfläche eines Außenkonus beinhaltet mehrere axial verlaufende Nuten zur Ölverteilung. Ferner weist der Außenkonus eine radial innen umlaufende Ölfangnut auf. Der Außenkonus beinhaltet zudem zumindest eine stirnseitige Ausnehmung in radialer Richtung, die die Ölfangnut jeweils mit einer zugeordneten axial verlaufenden Nut zur Ölversorgung verbindet.
EP 0 460 513 A1 zeigt einen Reibring für eine Mehrfachkegel-Synchronschaltkupplung zum Verbinden einer Welle mit einem drehbar an der Welle gelagertem Drehglied mit einem axialen Fluidführungskanal, der gleichläufig zum Konusflächenwinkel ausgerichtet ist.
Obgleich sich der Stand der Technik bereits intensiv mit der Frage beschäftigt, wie den Reibbelägen Fluid zugeführt werden kann, kann es in Abhängigkeit insbesondere von einer Einbausituation oder einer konstruktiven Ausgestaltung einer Synchron-Schaltkupplung Verbesserungsmöglichkeiten hinsichtlich der Fluidzufuhr geben.
Es ist insofern eine Aufgabe der Erfindung, einen verbesserten Reibring für eine Mehrfachkegel-Synchronschaltkupplung anzugeben, eine verbesserte Mehrfachkegel-Synchronschaltung sowie eine verbesserte Wellenanordnung mit einer solchen Mehrfachkegel-Synchronschaltkupplung.
Die obige Aufgabe wird bei dem eingangs genannten Reibring dadurch gelöst, dass der Reibring wenigstens einen axialen Fluidführungskanal aufweist, der eine Erstreckungsrichtung hat, die in Bezug auf die Längsachse unter einem Fluidführungskanalwinkel ausgerichtet ist, der gegenläufig zu dem Konusflächenwinkel der Reibring-Konusfläche ausgerichtet ist, die vorzugsweise am Außenumfangsabschnitt ausgebildet ist.

Die obige Aufgabe wird ferner gelöst durch eine Mehrfachkegel-Synchronschaltkupplung zum Verbinden einer in einer Längsachse ausgerichteten Welle mit einem drehbar an der Welle gelagerten Drehglied, wobei die Mehrfachkegel-Synchronschaltkupplung einen erfindungsgemäßen Reibring aufweist.

Schließlich wird die obige Aufgabe gelöst durch eine Wellenanordnung, insbesondere für ein Kraftfahrzeuggetriebe, mit einer in einer Längsachse ausgerichteten Welle, an der ein Drehglied drehbar gelagert ist, und mit einer Mehrfachkegel-Synchronschaltkupplung der erfindungsgemäßen Art, wobei der Reibringkörper eine erste axiale Stirnseite und eine zweite axiale Stirnseite aufweist, wobei der Reibringkörper im Bereich der ersten axialen Stirnseite einen größeren Außendurchmesser aufweist als im Bereich der zweiten axialen Stirnseite, und wobei über einen Wellenkanal in der Welle ein Fluid so zugeführt wird, dass das Fluid zumindest teilweise in einen Bereich der ersten axialen Stirnseite des Reibringkörpers gelangt.

Bei manchen Mehrfachkegel-Synchronschaltkupplungen kann es aufgrund der Relativlage in Bezug auf ein zugeordnetes Drehglied und die Ausgestaltung bspw. einer asymmetrisch ausgeführten Führungsmuffe zu einer Situation kommen, dass ein Teil oder ein Großteil von dieser Synchron-Schaltkupplung zugeordnetem Fluid, das von radial innen ausgehend von einer Welle zugeführt wird, in einen Bereich gelangt, bei dem eine hinreichende Ölzufuhr nicht gewährleistet ist. Dies gilt insbesondere für den Fall, dass das Fluid überwiegend in den Bereich einer axialen Stirnseite gelangt, die dem größeren Außendurchmesser der Reibring-Konusfläche zugeordnet ist. Aufgrund der bei den Drehungen wirkenden Kräften gelangt das Öl dabei möglicherweise nicht in hinreichendem Maße in den Bereich zwischen der Reibring-Konusfläche und einer zugeordneten Gegen-Konusfläche.

Zu diesem Zweck beinhaltet der Reibring einen axialen Fluidführungskanal, der sich entlang einer Erstreckungsrichtung erstreckt, die in Bezug auf eine Längsachse gegenläufig zu dem Konusflächenwinkel ausgerichtet ist.

Unter einer gegenläufigen Ausrichtung wird vorliegend insbesondere verstanden, dass ein Durchmesser der Reibring-Konusfläche axial gesehen dort am geringsten ist, wo ein Durchmesser des Fluidführungskanals am größten ist, und umgekehrt. Der maximale Durchmesser des Fluidführungskanals ist vorzugsweise kleiner als der minimale Durchmesser der Reibring-Konusfläche.

Auf diese Weise ist es möglich, Fluid von jener axialen Seite, bei der die Reibring-Konusfläche den größten Durchmesser aufweist, in einer gegenläufig ansteigenden Richtung hin zu der gegenüberliegenden axialen Seite des Reibringes zu führen, von wo aus das Fluid dann auf einfache Weise in den Bereich des Reibeingriffes gelangen kann und schräg nach außen zwischen die Konusflächen gelangt.

Die Zufuhr hin zu der Konusfläche erfolgt folglich so, dass das Fluid zunächst durch den axialen Fluidführungskanal zu jener Seite transportiert wird, bei der die Reibring-Konusfläche ihren geringsten Durchmesser hat.

Hierdurch kann insgesamt erreicht werden, dass eine ausreichende Durchströmung der gegenüberliegenden Konusflächen zum Zwecke von deren Schmierung und/oder Kühlung erfolgen kann. Demzufolge kann die Reibung verringert werden, was einhergeht mit einer verringerten Wärmeentwicklung bis hin zu einer verlängerten Lebensdauer der Synchroneinheit.

Der Reibring ist insbesondere, jedoch nicht ausschließlich bei solchen Mehrfachkegel-Synchronschaltkupplungen verwendbar, die eine geradzahlige Synchronisierung aufweisen, also bspw. bei Doppelkegel-Synchronisierungen oder bei Vierfachkegel-Synchronisierungen.

Unter einer Synchron-Schaltkupplung wird vorliegend eine Kupplung verstanden, die dazu ausgebildet ist, einen Formschluss zwischen der Welle und dem an der Welle drehbar gelagerten Drehglied einzurichten.

Unter einer Kopplung zwischen einer Welle und einem Drehglied wird vorliegend vorzugsweise verstanden, dass diese in Drehrichtung formschlüssig gekoppelt werden, was direkt oder indirekt erfolgen kann, jedenfalls zwangläufig.

Eine Kopplung des Reibringkörpers mit der Welle (oder mit dem Drehglied) kann ebenfalls direkt oder indirekt erfolgen, und ist ebenfalls zwangläufig, wobei jedoch insbesondere bei einer indirekten Kopplung (bspw. über einen Synchronring) eine begrenzte Verdrehbarkeit zwischen Reibringkörper und Welle eingerichtet sein kann, die auf einen Winkelversatz von 30° und weniger eingeschränkt ist.

Der Konusflächenwinkel der Reibring-Konusfläche ist größer als Null und ist vorzugsweise kleiner als 45°, insbesondere kleiner als 20°.

Die Erstreckungsrichtung des Fluidführungskanals ist vorliegend vorzugsweise eine Hauptrichtung des Fluidführungskanals, insbesondere eine Richtung, entlang der eine Bearbeitung des Reibringkörpers zum Zwecke der Herstellung des Fluidführungskanals erfolgt. Der Fluidführungskanal kann durchgehend geradlinig ausgerichtet sein, kann jedoch auch gebogen sein oder durch mehrere geradlinige Einzelsegmente gebildet sein. Die Erstreckungsrichtung soll dabei im Wesentlichen die Richtung zwischen einer Eintrittsmündung des Fluidführungskanals hin zu einer Austrittsöffnung des Fluidführungskanals sein.

Der Fluidführungskanalwinkel ist vorzugsweise kleiner 45°, insbesondere kleiner 20° und kann vorliegend insbesondere kleiner 10° sein. Der Fluidführungskanalwinkel ist vorzugsweise größer 0° und ist insbesondere größer 2°, insbesondere größer 5°.

Der Reibringkörper kann als Massivbauteil ausgeführt sein, an dem der Fluidführungskanal durch spanende oder spanlose Bearbeitung ausgebildet ist.

Der Reibring ist vorzugsweise ein verzahnungsfreier Gleichlaufring. Vorzugsweise weist der Reibring ausschließlich an seinem Außenumfang eine Reibring-Konusfläche auf, die dazu ausgebildet ist, mit einer Konusfläche eines anderen Bauelementes in Reibeingriff zu treten, und weist am Innenumfang vorzugsweise keine entsprechende Konusfläche und keine Reibfläche auf. Am Innenumfang ist der Reibring vorzugsweise geradlinig ausgebildet, so dass ein Innenumfangsabschnitt etwa parallel zu der Längsachse ausgerichtet ist.

Unter einer Konusfläche wird vorliegend insbesondere eine Konusreibfläche verstanden. Der Reibring weist vorzugsweise ausschließlich an seinem Außenumfang eine solche Konusfläche auf und hat an seinem Innenumfang vorzugsweise keine Reibfunktion, sondern vorzugsweise ausschließlich eine Zentrierfunktion in Form einer zylindrischen Fläche. Die Konusfläche des Reibringes steht vorzugsweise mit einer Konusfläche eines weiteren Bauelementes in Reibeingriff, bei dem es sich vorzugsweise um einen Konusring handelt. Ein Konusring weist vorzugsweise sowohl an seinem Außenumfang als auch an seinem Innenumfang jeweils eine Konusfläche in Form einer Konusreibfläche auf.

Der Fluidführungskanal erstreckt sich in axialer Richtung unter dem Fluidführungskanalwinkel in Bezug auf die Längsachse. Der Fluidführungskanal ist dabei vorzugsweise in einer Axialebene angeordnet, in der auch die Längsachse angeordnet ist.

Der Reibringkörper kann an einer axialen Seite mit einer Mehrzahl von Mitnahmelaschen ausgebildet sein, die bspw. in entsprechende Mitnahmeöffnungen in einem Synchronring greifen, um auf diese Weise eine Drehkopplung mit einem solchen Synchronring zu erzielen. Die Anzahl der Mitnahmelaschen kann bspw. drei sein. Die Mitnahmelaschen können sich bspw. jeweils über einen Winkel von ca. 60° erstrecken. Sofern der Reibring eine oder mehrere Mitnahmelaschen aufweist, so ist es bevorzugt, wenn der Fluidführungskanal in einem Umfangsbereich des Reibringkörpers ausgebildet ist, in dem keine Mitnahmelasche ausgebildet ist, also insbesondere zwischen zwei in Umfangsrichtung benachbarten Mitnahmelaschen.

An wenigstens einer axialen Stirnseite können Nuten vorgesehen sein, die dazu ausgebildet sind, um Fluid in radialer Richtung zu führen, insbesondere dann, wenn eine solche axiale Stirnseite im eingebauten Zustand benachbart zu einer axialen Stirnseite eines weiteren Bauelementes angeordnet ist, bspw. benachbart zu einem Losrad oder benachbart zu einem Synchronringabschnitt.

Die Aufgabe wird somit vollkommen gelöst.

Bei dem erfindungsgemäßen Reibring ist es bevorzugt, wenn der Fluidführungskanal einen umfänglich geschlossenen Bohrungsabschnitt in dem Reibringkörper aufweist.

Bei dieser Ausführungsform kann der Fluidführungskanal in axialer Richtung insbesondere einen einheitlichen Durchmesser aufweisen.

Gemäß einer weiteren Ausführungsform weist der Fluidführungskanal einen Nutabschnitt auf, der an einem Innenumfangsabschnitt des Reibringkörpers ausgebildet ist.

Hierbei kann der Nutabschnitt dazu ausgebildet sein, dass Fluid in axialer Richtung zwischen dem Nutboden und einem im Bereich eines Innenumfangsabschnittes des Reibringkörpers angeordneten weiteren Bauteil strömt.

Aufgrund der Ausrichtung mit dem Fluidführungskanalwinkel gegenläufig zu dem Konusflächenwinkel wird dabei aufgrund der Drehung des Reibringes und der damit einhergehenden Fliehkraft eine Fluidströmung in der axialen Richtung unterstützt bzw. gefördert, in der sich der wirksame Durchmesser des axialen Fluidführungskanals vergrößert.

Der Fluidführungskanal mündet insbesondere in einer axialen Stirnseite des Reibringkörpers, die jenem Abschnitt der Reibring-Konusfläche zugeordnet ist, die den kleineren Außendurchmesser aufweist. Hierdurch kann das aus dem Fluidführungskanal ausströmende Fluid anschließend in radialer Richtung nach außen in den Eintrittsbereich des Reibeingriffes gelangen und von dort wiederum schräg radial nach außen entlang dieses Reibringriffes, um dort für die hinreichende Durchströmung zu sorgen.

Generell kann der Fluidführungskanal sich von einem Bereich zwischen axialen Stirnseiten hin zu jener axialen Stirnseite erstrecken, bei der die Konusfläche den kleineren Durchmesser aufweist.

Von besonderem Vorzug ist es jedoch, wenn der Reibringkörper eine erste axiale Stirnseite und eine zweite axiale Stirnseite aufweist, wobei der Fluidführungskanal in die erste axiale Stirnseite mündet und/oder in die zweite axiale Stirnseite mündet.

Besonders bevorzugt ist es, wenn der Fluidführungskanal sich von einer axialen Stirnseite hin zu der anderen axialen Stirnseite erstreckt.

Ein effektiver Außendurchmesser des Fluidführungskanals im Bereich jener axialen Stirnseite, bei der der Reibringkörper einen größeren Außendurchmesser aufweist, ist kleiner als der effektive Mündungsdurchmesser des Fluidführungskanals im Bereich jener Stirnseite, bei der der Reibringkörper den kleineren Außendurchmesser aufweist.

Die Ausrichtung eines Fluidführungskanals unter einem Fluidführungskanalwinkel, der größer ist als Null, ist bei einem Fluidführungskanal, der durch einen Bohrungsabschnitt gebildet ist, durch die Bohrungsachse realisierbar.

Bei einem Fluidführungskanal, der durch einen Nutabschnitt gebildet ist, der an einer Innenseite bzw. an einem Innenumfang des Reibringkörpers ausgebildet ist, kann ein derartiger Fluidführungskanalwinkel größer Null dadurch eingerichtet sein, dass die Querschnittsfläche und/oder die radiale Tiefe des Fluidführungskanals bzw. der Nut sich in einer axialen Richtung gezielt vergrößert.

Demzufolge ist es bevorzugt, wenn der Reibringkörper eine erste axiale Stirnseite und eine zweite axiale Stirnseite aufweist, wobei der Reibringkörper im Bereich der ersten axialen Stirnseite eine größeren Außendurchmesser aufweist als im Bereich der zweiten axialen Stirnseite, wobei sich eine Querschnittsfläche und/oder ein Außendurchmesser des Fluidführungskanals entlang der Längsachse hin zu der zweiten axialen Stirnseite vergrößert.

Die Erstreckungsrichtung des Fluidführungskanals ist in diesem Fall vorzugsweise durch den sich ändernden Außendurchmesser des Fluidführungskanals definiert.

Generell ist es möglich, dass der Reibringkörper lediglich einen einzelnen Fluidführungskanal aufweist.

Von besonderem Vorzug ist es jedoch, wenn der Reibring eine Mehrzahl von Fluidführungskanälen aufweist, die über den Umfang des Reibringkörpers verteilt angeordnet sind.

In diesem Fall kann ein Einbau des Reibringkörpers drehpositionsunabhängig erfolgen.

Ferner können die Fluidführungskanäle vorzugsweise in Umfangsrichtung zwischen Mitnahmelaschen eines solchen Reibringes angeordnet werden.

Bei der erfindungsgemäßen Mehrfachkegel-Synchronschaltkupplung ist es bevorzugt, wenn der Reibring in der Drehrichtung mit der Welle gekoppelt ist.

Die Kopplung ist vorzugsweise eine indirekte Kopplung über einen Synchronring.

Demzufolge ist es vorteilhaft, wenn die Synchron-Schaltkupplung einen Synchronring aufweist, der an einer radialen Innenseite eine Synchronring-Konusfläche aufweist, wobei der Synchronring in der Drehrichtung mit einer Führungsmuffe gekoppelt ist, die an der Welle festlegbar ist, und wobei der Reibring in der Drehrichtung mit dem Synchronring gekoppelt ist.

Die Kopplung zwischen Synchronring und Führungsmuffe kann, wie oben beschrieben, eine solche in Umfangsrichtung formschlüssige Kopplung sein, bei der der Synchronring in Bezug auf die Führungsmuffe begrenzt verdrehbar ist, um eine Sperrsynchronisierung zu realisieren.

Insgesamt ist es ferner vorteilhaft, wenn die Mehrfachkegel-Synchronschaltkupplung versehen ist mit einer Führungsmuffe, die drehfest mit der Welle verbindbar ist und die eine Führungsmuffen-Axialverzahnung aufweist, mit einer Schaltmuffe, die eine Schaltmuffen-Axialverzahnung aufweist, die mit der Führungsmuffen-Axialverzahnung in Eingriff steht und axial verschieblich in Bezug auf die Führungsmuffe gelagert ist, mit einem Kupplungskörper, der drehfest mit dem Drehglied verbindbar ist und eine Kupplungskörper-Axialverzahnung aufweist, die mit der Schaltmuffen-Axialverzahnung in Eingriff bringbar ist, um das Drehglied formschlüssig mit der Welle zu verbinden, mit einem Synchronring, der in Drehrichtung mit der Führungsmuffe gekoppelt ist und der einen Synchronring-Konusfläche aufweist, und mit einem Konusring, der in Drehrichtung mit dem Kupplungskörper gekoppelt ist und der eine erste Konusring-Konusfläche aufweist, die mit der Synchronring-Konusfläche in Reibeingriff steht, sowie eine zweite Konusring-Konusfläche aufweist, wobei der Reibring in der Drehrichtung mit dem Synchronring gekoppelt ist, wobei die Reibring-Konusfläche mit der zweiten Konusring-Konusfläche in Reibeingriff steht.

Generell ist es auch denkbar, anstelle einer solchen Doppelkegelsynchronisierung, mit einem derartigen Aufbau eine Vierfachkegel-Synchronisierung zu realisieren.

Hierbei sind ggf. drei Konusringe in radialer Richtung zwischen Synchronring-Konusfläche und Reibring-Konusfläche angeordnet.

Bei der erfindungsgemäßen Wellenanordnung gelangt das Fluid zumindest teilweise in einen Bereich der ersten axialen Stirnseite des Reibringkörpers, also in jenem Bereich, bei dem der Reibringkörper einen größeren Außendurchmesser aufweist.

Ausgehend hiervon kann das Fluid dann über den Fluidführungskanal hin zu der zweiten axialen Stirnseite gelangen, bei der der Reibringkörper einen kleineren Außendurchmesser aufweist.

Generell ist es bei der erfindungsgemäßen Wellenanordnung ferner vorteilhaft, wenn der Reibring radial außerhalb eines Nabenabschnittes einer Führungsmuffe angeordnet ist und axial zumindest teilweise mit dem Nabenabschnitt der Führungsmuffe ausgerichtet ist.

Bei einer derartigen Einbaulage kann zwischen dem Nabenabschnitt der Führungsmuffe und einem in der Regel direkt benachbart hierzu angeordneten Drehglied wie einem Losrad von radial innen zuströmendes Fluid nur schwer in den radialen Bereich zwischen dem Innenumfangsabschnitt des Reibringes und dem Außenumfangsabschnitt des Nabenabschnittes gelangen, insbesondere dann, wenn dieser Nabenabschnitt sehr breit und/oder asymmetrisch ausgebildet ist. Hierbei ist es dann vorteilhaft, dass der Reibring den Fluidführungskanal aufweist, dessen Fluidführungskanalwinkel gegenläufig zu dem Konusflächenwinkel ausgerichtet ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 : eine schematische Längsschnittansicht durch eine Ausführungsform eines erfindungsgemäßen Reibringes;
Fig. 2 : eine schematische axiale Draufsicht auf eine erste axiale Stirnseite des Reibringes der Fig. 1 ;
Fig. 2a : eine Detailansicht IIa der Fig. 2 ;
Fig. 3 : eine schematische axiale Draufsicht auf eine zweite axiale Stirnseite des Reibringes der Fig. 1 ;
Fig. 4 : eine weitere Ausführungsform eines erfindungsgemäßen Reibringes in einer Draufsicht auf eine erste axiale Stirnseite;
Fig. 5 : eine Schnittansicht entlang der Linie V-V der Fig. 4 ;
Fig. 6 : eine schematische Darstellung einer Wellenanordnung mit einer Mehrfachkegel-Synchronschaltkupplung, in der ein erfindungsgemäßer Reibring integriert ist; und
Fig. 7 : eine schematische Darstellung einer Vierfachkegel-Synchronschaltkupplung, in der ein erfindungsgemäßer Reibring integriert ist.

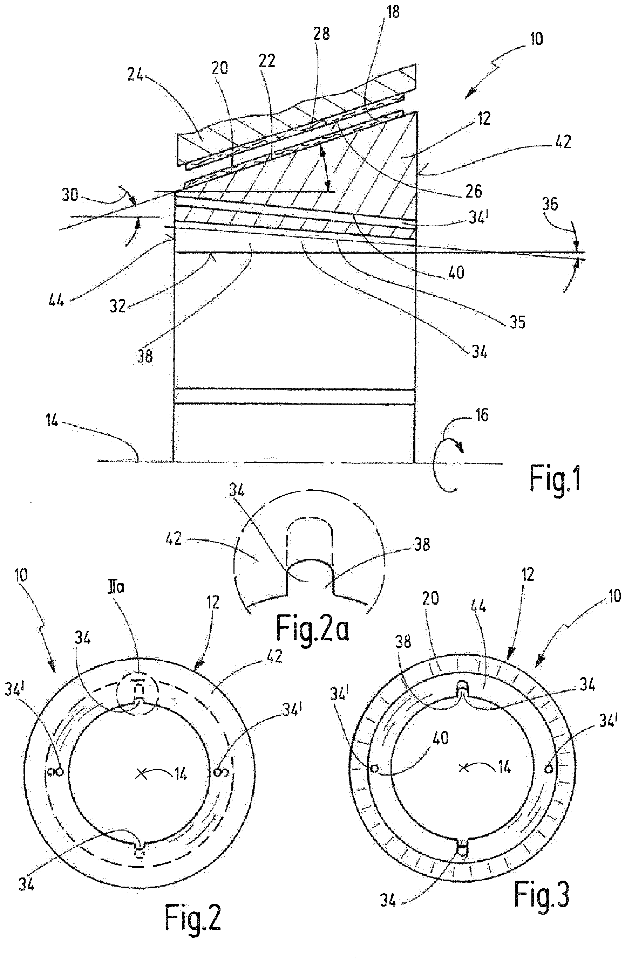

In Fig. 1 ist ein Reibring für eine Mehrfachkegel-Synchronschaltkupplung schematisch im Längsschnitt dargestellt und generell mit 10 bezeichnet.

Der Reibring 10 weist einen ringförmig geschlossenen Reibringkörper 12 auf, der eine Längsachse 14 definiert. Der Reibring 10 ist um die Längsachse 14 in einer Drehrichtung 16 verdrehbar.

An einem Außenumfangsabschnitt 18 des Reibringkörpers 12 ist eine Reibring-Konusfläche 20 ausgebildet, an der ein Reibring-Reibbelag 22 festgelegt sein kann.

In Fig. 1 ist schematisch ferner ein weiteres Bauelement in Form eines Konusringes 24 gezeigt, der eine Konusring-Innenkonusfläche 26 aufweist. An der Konusring-Innenkonusfläche 26 des Konusrings 24 kann ein Konusring-Reibbelag 28 angeordnet sein. Bei einer relativen Axialverschiebung von Reibring 10 und Konusring 24 kommen die Reibring-Reibbeläge 22, 28 in Eingriff, wodurch eine Synchronisation der Drehzahlen dieser Bauelemente erreichbar ist, wie es generell im Stand der Technik bekannt ist.

Die Reibring-Konusfläche 20 ist unter einem Konusflächenwinkel 30 in Bezug auf die Längsachse 14 ausgerichtet. Der Wert des Winkels 30 kann bspw. in einem Bereich zwischen 5° und 20° liegen.

Ein Innenumfang 32 des Reibringkörpers 12 ist generell parallel zu der Längsachse 14 ausgerichtet und beinhaltet vorzugsweise keine Reibflächenfunktion. Der Reibringkörper 12 kann ein massiver Körper sein.

An dem Innenumfang 32 ist ein axialer Fluidführungskanal 34 ausgebildet, der sich entlang einer Erstreckungsrichtung 35 erstreckt, die in Bezug auf die Längsachse 14 einen Fluidführungskanalwinkel 36 einnimmt. Der Fluidführungskanalwinkel 36 ist gegenläufig zu dem Konusflächenwinkel 30.

Der Fluidführungskanal 34 ist gebildet durch eine Nut 38, die die Erstreckungsrichtung 35 dadurch erreicht, dass sich der Querschnitt der Nut in axialer Richtung vergrößert.

Alternativ hierzu ist ein Fluidführungskanal 34' dargestellt, der durch einen Bohrungsabschnitt 40 gebildet ist. In diesem Fall ergibt sich die Erstreckungsrichtung des Fluidführungskanals 34' durch die Achse der Bohrung 40.

Der Reibringkörper 12 weist eine erste axiale Stirnseite 42 und eine zweite axiale Stirnseite 44 auf. Der Konusflächenwinkel 30 ist so ausgerichtet, dass der Reibringkörper 12 im Bereich der ersten axialen Stirnseite 42 einen größeren Durchmesser aufweist als im Bereich der zweiten axialen Stirnseite 44.

Durch die Gegenläufigkeit des Fluidführungskanalwinkels 36 in Bezug auf den Konusflächenwinkel 30 ist ein effektiver Durchmesser des Fluidführungskanals 34; 34' in dem Bereich der ersten axialen Stirnseite 42 kleiner als in dem Bereich der zweiten axialen Stirnseite 44.

In den Figuren 2, 2a und 3 ist dargestellt, dass eine Mehrzahl derartiger Fluidführungskanäle 34, 34' über den Umfang des Reibringkörpers 12 verteilt angeordnet sein können.

In den Figuren 2 und 3 ist dargestellt, dass an dem Reibringkörper 12 zwei diametral gegenüberliegende Fluidführungskanäle 34 ausgebildet sind, sowie zwei diametral gegenüberliegend angeordnete Fluidführungskanäle 34'. Dies ist jedoch lediglich dargestellt, um die verschiedenen Arten von Fluidführungskanälen zu demonstrieren. Vorzugsweise weist der Reibringkörper eine Mehrzahl von Fluidführungskanälen auf, die jeweils entweder als Nutabschnitte 38 oder als Bohrungsabschnitte 40 ausgebildet sind.

Sofern der Reibring 10 Mitnahmelaschen aufweist, die zur Drehkopplung mit einem Synchronring dienen können, sind die Fluidführungskanäle vorzugsweise in Umfangsrichtung zwischen derartigen Mitnahmelaschen angeordnet.

Der Fluidführungskanal 34 sowie der Fluidführungskanal 34' erstrecken sich jeweils in axialer Richtung über die gesamte axiale Länge des Reibringkörpers 12, derart, dass die Fluidführungskanäle sowohl in die erste axiale Stirnseite 42 münden als auch in die zweite axiale Stirnseite 44 münden.

Die Mündung der Fluidführungskanäle 34, 34' im Bereich der zweiten axialen Stirnseite 44 weist einen größeren effektiven Durchmesser auf als die Mündung der Fluidführungskanäle 34, 34' im Bereich der ersten axialen Stirnseite 42.

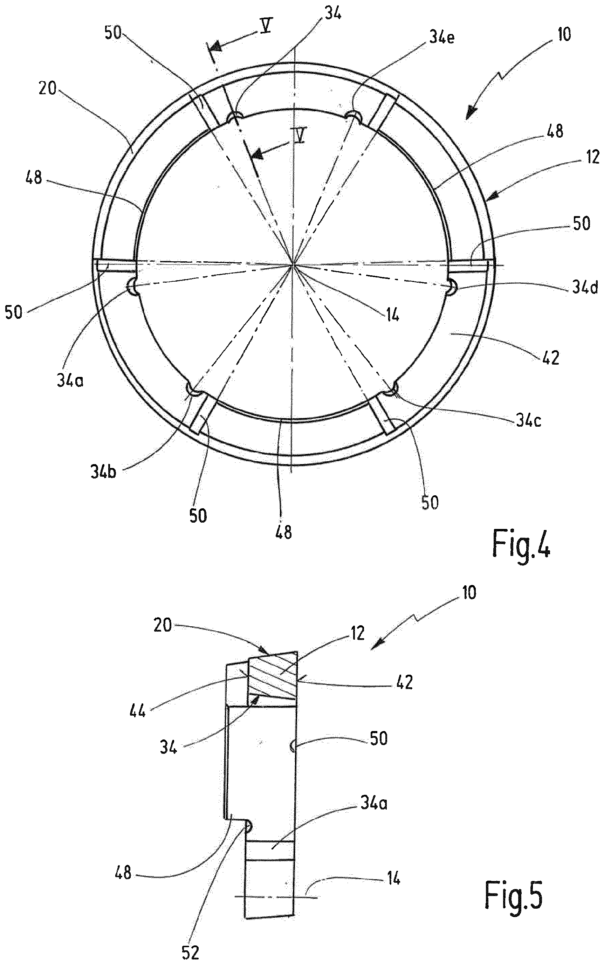

In den Figuren 4 und 5 ist eine weitere Ausführungsform eines Reibringes gezeigt, der hinsichtlich Aufbau und Funktionsweise generell dem Reibring der Figuren 1 bis 3 entspricht. Gleiche Elemente sind daher durch gleiche Bezugszeichen gekennzeichnet.

In den Figuren 4 und 5 ist erkennbar, dass der Reibring 10 drei Mitnahmelaschen 48 aufweist, die über den Umfang verteilt angeordnet sind und sich jeweils etwa über einen Winkelbereich von ca. 60° erstrecken.

Ferner sind in den Figuren 4 und 5 Radialnuten 50 im Bereich der ersten axialen Stirnseite 42 und Radialnuten/Freistiche 52 im Bereich der zweiten axialen Stirnseite 44 dargestellt.

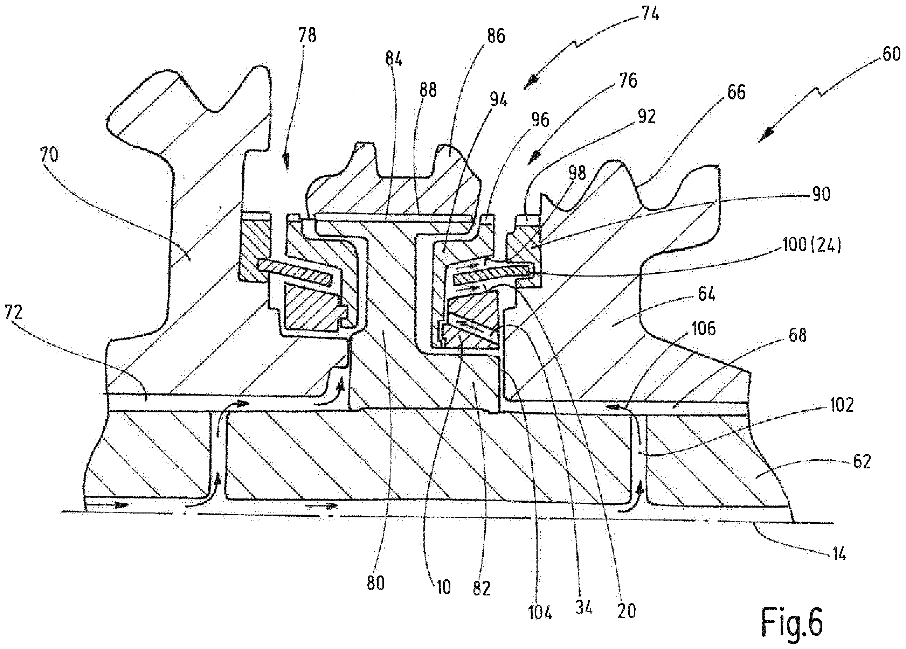

In Fig. 6 ist eine Wellenanordnung 60 dargestellt, die eine Welle 62 beinhaltet, die entlang einer Längsachse 14 ausgerichtet ist, sowie ein Losrad 64 beinhaltet, das an der Welle 62 drehbar gelagert ist. Das Losrad 64 weist außenumfänglich eine Losradverzahnung 66 zum Eingriff mit einem Festrad auf, das an einer anderen Welle gelagert ist. Das Losrad 64 ist über ein Losradlager 68 drehbar in Bezug auf die Welle 62 gelagert.

An der Welle 62 ist ferner ein zweites Losrad 70 gelagert, das mittels eines zweiten Losradlagers 72 drehbar an der Welle 62 gelagert ist.

Zwischen den zwei Losrädern 64, 70 ist ein Schaltkupplungspaket 74 angeordnet, mittels dessen die Losräder 64, 70 alternativ drehfest mit der Welle 62 verbindbar sind.

Das Schaltkupplungspaket 74 weist zur Verbindung des Losrades 64 mit der Welle 62 eine Mehrfachkegel-Synchronschaltkupplung 76 auf. Ferner beinhaltet das Schaltkupplungspaket 74 zur Verbindung zwischen Welle 62 und zweitem Losrad 70 eine zweite Schaltkupplung 78, die identisch aufgebaut sein kann, wie die Mehrfachkegel-Synchronschaltkupplung 76, jedoch auch anders realisiert sein kann.

Im Folgenden wird insbesondere auf die Mehrfachkegel-Synchronschaltkupplung 76 Bezug genommen. Diese beinhaltet eine Führungsmuffe 80, die drehfest und axial unverschieblich in Bezug auf die Welle 62 festgelegt ist. Die Führungsmuffe 80 weist einen nicht näher bezeichneten Radialsteg und einen sich axial erstreckenden Nabenabschnitt 82 auf. An einem Außenumfang der Führungsmuffe 80 ist eine Führungsmuffen-Axialverzahnung 84 ausgebildet.

Die Synchronschaltkupplung 76 beinhaltet ferner eine Schaltmuffe 86, die eine Schaltmuffen-Axialverzahnung 88 aufweist, die in die Führungsmuffen-Axialverzahnung 84 greift. Die Schaltmuffe 86 ist in Längsrichtung verschieblich in Bezug auf die Führungsmuffe 80 gelagert.

Die Führungsmuffe 80 und die Schaltmuffe 86 sind Teil des Schaltkupplungspaketes 74 und sind folglich auch Teil der zweiten Schaltkupplungspaket 78.

Die Synchronschaltkupplung 76 beinhaltet ferner einen Kupplungskörper 90, der starr an dem Losrad 64 festgelegt ist. Der Kupplungskörper 90 weist an seinem Außenumfang eine Kupplungskörper-Axialverzahnung 92 auf.

In der in Fig. 6 gezeigten Neutralposition der Schaltmuffe 86 befindet sich die Schaltmuffen-Axialverzahnung 88 ausschließlich in Eingriff mit der Führungsmuffen-Axialverzahnung 84, jedoch nicht mit der Kupplungskörper-Axialverzahnung 92, so dass das Losrad 64 frei drehbar in Bezug auf die Welle 62 ist.

Zum Herstellen einer Drehverbindung zwischen Welle 62 und Losrad 64 wird die Schaltmuffe 86 in Richtung hin zu dem Losrad 64 verschoben, bis die Schaltmuffen-Axialverzahnung 88 in die Kupplungskörper-Axialverzahnung 92 greift, um auf diese Weise eine in Drehrichtung formschlüssige Verbindung herzustellen.

Zum Angleichen der Drehzahlen beinhaltet die Synchronschaltkupplung 76 einen Synchronring 94, der begrenzt verdrehbar in Bezug auf die Führungsmuffe 80 gelagert ist. Der Synchronring 94 weist eine Synchronring-Außenverzahnung 96 in Form einer Sperrverzahnung auf. In einer Relativdrehlage in Bezug auf die Führungsmuffe 80 kann die Schaltmuffen-Axialverzahnung 88 durch die Synchronring-Außenverzahnung 96 hindurchgeschoben werden. In der anderen Relativdrehlage zu der Führungsmuffe 80 sperrt die Synchronring-Außenverzahnung 96. Ein Zurückverdrehen in die Freigabestellung kann erst dann erfolgen, wenn ein Drehzahlangleich zwischen der Welle 62 und dem Losrad 64 erfolgt ist.

Zum Angleichen der Drehzahlen beinhaltet der Synchronring 94 eine Synchronring-Konusfläche 98 an seinem Innenumfang.

Ferner ist der Synchronring 94 mit einem Reibring 10 gekoppelt, der gemäß einer der Ausführungsformen der Figuren 1 bis 5 ausgebildet sein kann.

Der Reibring 10 ist radial außerhalb des Nabenabschnittes 82 der Führungsmuffe 80 angeordnet. Der Nabenabschnitt 82 grenzt an eine axiale Stirnseite des Losrades 64 an. Auch der Reibring 10 grenzt an diese axiale Stirnseite des Losrades 64 an.

Zwischen der Reibring-Konusfläche 20 des Reibringes 10 und der Synchronring-Konusfläche 98 ist ein Konusring 100 angeordnet, der eine innenumfängliche Synchronring-Konusfläche aufweist, die mit der Reibring-Konusfläche 20 in Eingriff treten kann. Ferner weist der Konusring 100 eine außenumfängliche Konusfläche auf, die mit der Synchronring-Konusfläche 98 in Reibeingriff treten kann.

Bei einem Schaltvorgang drückt die Schaltmuffe 86 in axialer Richtung gegen den Synchronring, so dass dieser bei Vorhandensein einer Relativdrehzahl in die Sperrposition umschlägt. Ein weiteres Andrücken der Schaltmuffe 86 führt dazu, dass die verschiedenen oben beschriebenen Konusflächen in Reibeingriff gelangen, um für einen Drehzahlangleich zu sorgen. Sobald der Drehzahlangleich erfolgt ist, kann der Synchronring 94 wieder zurück verdreht werden, und die Schaltmuffe 86 kann in Richtung hin zu dem Kupplungskörper 90 durchgeschaltet werden.

Die Synchronschaltkupplung 76 wird zur Verringerung der Reibung und zur Verlängerung der Lebensdauer mit Fluid versorgt. Zu diesem Zweck weist die Welle 62 einen Wellenkanal 102 auf, der sich in axialer Richtung erstreckt und einen radialen Auslass aufweist, der bspw. im Bereich des Losradlagers 68 vorgesehen sein kann. Im Bereich des zweiten Losradlagers 72 kann ein entsprechender radialer Auslass vorgesehen sein.

Das in das erste Losradlager 68 strömende Fluid gelangt, wie es durch Pfeile angedeutet ist, in einen axialen Bereich 104 zwischen dem Nabenabschnitt 82 und dem Losrad 64. Von dort gelangt das Fluid zum einen aufgrund von Radialnuten in dem Reibring 10 radial weiter nach außen. Das Fluid gelangt jedoch tendenziell nur zu einem geringen Teil in einen radialen Bereich zwischen dem Reibring 10 und dem Außenumfang des Nabenabschnittes 82.

Durch die Ausbildung des Fluidführungskanals 34 kann das Fluid aus dem Bereich 104 jedoch nun in axialer Richtung in Richtung hin zu dem Radialsteg der Führungsmuffe 80 strömen, wie es durch einen Pfeil in Fig. 6 angedeutet ist. Von dort kann das Fluid dann in den Bereich der Reibeingriffe zwischen Synchronring 94, Konusring 100 und Reibring 10 gelangen, um die zugeordneten Reibflächen während eines Drehzahlangleichs zu schmieren und zu kühlen, was zu einer Verlängerung der Lebensdauer der Synchronschaltkupplung 76 beitragen kann.

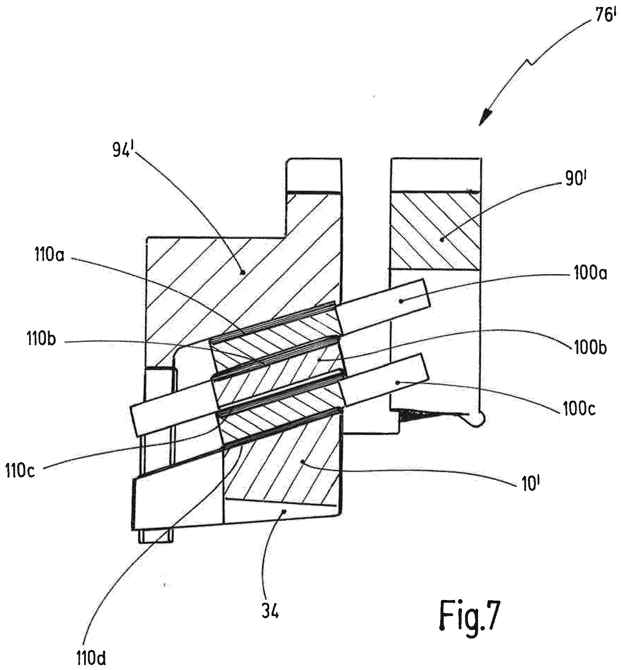

In Fig. 7 ist eine weitere Ausführungsform einer Synchronschaltkupplung 76' dargestellt, die hinsichtlich Aufbau und Funktionsweise generell der Synchronschaltkupplung 76 der Fig. 6 entsprechen kann. Gleiche Elemente sind daher durch gleiche Bezugszeichen gekennzeichnet. Im Folgenden werden im Wesentlichen die Unterschiede erläutert.

So ist die Synchronschaltkupplung 76' mit einer Vierfachkegelsynchronisierung ausgestattet. Der Reibring 10' weist an seinem Innenumfang einen Fluidführungskanal 34 auf. Zwischen einer nicht näher bezeichneten Innenkonusfläche des Synchronringes 94' und einer nicht näher bezeichneten Reibring-Konusfläche des Reibringes 10' sind drei Konusringe 100a, 100b, 100c angeordnet. Ein Außenumfang des radial äußersten Konusringes 100a steht in Reibeingriff mit einer Innenkonusfläche des Synchronringes 94', was bei 110a gezeigt ist. Der radial äußerste Konusring 100a ist mit dem Kupplungskörper 90' drehgekoppelt.

Ein radial innerster Konusring 100c steht mit seiner radial inneren Konusfläche in Reibeingriff mit der nicht näher bezeichneten Reibring-Konusfläche des Reibringes 10', was in Fig. 7 bei 110d gezeigt ist. Der radial innerste Konusring 100c ist mit dem Kupplungskörper 90' drehgekoppelt.

In radialer Richtung zwischen den Konusringen 100a, 100c ist ein radial mittlerer Konusring 100b angeordnet, der mit dem Synchronring 94' drehgekoppelt ist. Eine radial äußere Konusfläche des mittleren Konusringes 100b steht in Reibeingriff mit einer radial inneren Konusfläche des radial äußeren Konusringes 100a, was bei 110b gezeigt ist. Eine radial innere Konusfläche des mittleren Konusringes 100b steht in Reibgriff mit einer radial äußeren Konusfläche des radial inneren Konusringes 100c, was bei 110c gezeigt ist.

Mit einer Vierfachkegelsynchronisierung können nochmals deutlich geringere Schaltkräfte realisiert werden.

## Patentansprüche

1. Reibring (10) für eine Mehrfachkegel-Synchronschaltkupplung (76) zum Verbinden einer Welle (62) mit einem drehbar an der Welle (62) gelagerten Drehglied (64), wobei der Reibring (10) einen Reibringkörper (12) aufweist, der eine Längsachse (14) definiert und der in einer Drehrichtung (16) mit der Welle (62) oder mit dem Drehglied koppelbar ist, wobei der Reibringkörper (12) an einem Umfangsabschnitt (18) eine Reibring-Konusfläche (20) aufweist, die dazu ausgebildet ist, mit einer Konusfläche (26) eines weiteren Bauelementes (24) in Reibeingriff zu treten, wobei die Reibring-Konusfläche (20) unter einem Konusflächenwinkel (30) in Bezug zu der Längsachse (14) ausgerichtet ist, wobei der Reibring (10) wenigstens einen axialen Fluidführungskanal (34; 34') aufweist
**dadurch gekennzeichnet, dass**
der Fluidführungskanal (34, 34') eine Erstreckungsrichtung (35) aufweist, die in Bezug auf die Längsachse (14) unter einem Fluidführungskanalwinkel (36) ausgerichtet ist, der gegenläufig zu dem Konusflächenwinkel (30) ausgerichtet ist.

2. Reibring nach Anspruch 1, **dadurch gekennzeichnet, dass** der Fluidführungskanal (34') einen umfänglich geschlossenen Bohrungsabschnitt in dem Reibringkörper (12) aufweist.

3. Reibring nach Anspruch 1 oder 2, **dadurch gekennzeichnet, dass** der Fluidführungskanal (34) einen Nutabschnitt aufweist, der an einem Innenumfangsabschnitt (32) des Reibringkörpers (12) ausgebildet ist.

4. Reibring nach einem der Ansprüche 1 - 3, **dadurch gekennzeichnet, dass** der Reibringkörper (12) eine erste axiale Stirnseite (42) und eine zweite axiale Stirnseite (44) aufweist, wobei der Fluidführungskanal (34; 34') in die erste axiale Stirnseite (42) mündet und/oder in die zweite axiale Stirnseite (44) mündet.

5. Reibring nach einem der Ansprüche 1 - 4, **dadurch gekennzeichnet, dass** der Reibringkörper (12) eine erste axiale Stirnseite (42) und eine zweite axiale Stirnseite (44) aufweist, wobei der Reibringkörper (12) im Bereich der ersten axialen Stirnseite (42) eine größeren Außendurchmesser aufweist als im Bereich der zweiten axialen Stirnseite (44), wobei sich eine Querschnittsfläche des Fluidführungskanals (34) entlang der Längsachse (14) hin zu der zweiten axialen Stirnseite (44) vergrößert.

6. Reibring nach einem der Ansprüche 1 - 5, **dadurch gekennzeichnet, dass** der Reibring (12) eine Mehrzahl von Fluidführungskanälen (34) aufweist, die über den Umfang des Reibringkörpers (12) verteilt angeordnet sind.

7. Mehrfachkegel-Synchronschaltkupplung zum Verbinden einer in einer Längsachse (14) ausgerichteten Welle (62) mit einem drehbar an der Welle (62) gelagerten Drehglied (64), wobei die Mehrfachkegel-Synchronschaltkupplung einen Reibring (10) nach einem der Ansprüche 1 - 6 aufweist.

8. Mehrfachkegel-Synchronschaltkupplung nach Anspruch 7, **dadurch gekennzeichnet, dass** der Reibring (10) in der Drehrichtung (16) mit der Welle (62) gekoppelt ist.

9. Mehrfachkegel-Synchronschaltkupplung nach Anspruch 8, **gekennzeichnet durch** einen Synchronring, der an einer radialen Innenseite eine Synchronring-Konusfläche (98) aufweist, wobei der Synchronring (94) in der Drehrichtung (16) mit einer Führungsmuffe (80) gekoppelt ist, die an der Welle (62) festlegbar ist, und wobei der Reibring (10) in der Drehrichtung (16) mit dem Synchronring (94) gekoppelt ist.

10. Mehrfachkegel-Synchronschaltkupplung nach einem der Ansprüche 7 - 9, mit
- einer Führungsmuffe (80), die drehfest mit der Welle (62) verbindbar ist und die eine Führungsmuffen-Axialverzahnung (84) aufweist,
- einer Schaltmuffe (86), die eine Schaltmuffen-Axialverzahnung (88) aufweist, die mit der Führungsmuffen-Axialverzahnung (84) in Eingriff steht, und die axial verschieblich in Bezug auf die Führungsmuffe (80) gelagert ist,
- einem Kupplungskörper (90), der drehfest mit dem Drehglied (64) verbindbar ist und eine Kupplungskörper-Axialverzahnung (92) aufweist, die mit der Schaltmuffen-Axialverzahnung (88) in Eingriff bringbar ist, um das Drehglied (64) formschlüssig mit der Welle (62) zu verbinden,
- einem Synchronring (94), der in Drehrichtung mit der Führungsmuffe (80) gekoppelt ist und der eine Synchronring-Konusfläche (98) aufweist, und
- einem Konusring (24), der in Drehrichtung mit dem Kupplungskörper (90) gekoppelt ist und der eine erste Konusring-Konusfläche aufweist, die mit der Synchronring-Konusfläche (98) in Reibeingriff steht, sowie eine zweite Konusring-Konusfläche (26) aufweist,
- wobei der Reibring (10) in der Drehrichtung (16) mit dem Synchronring (94) gekoppelt ist, wobei die Reibring-Konusfläche (20) mit der zweiten Konusring-Konusfläche (26) in Reibeingriff steht.

11. Wellenanordnung (60) mit einer in einer Längsachse (14) ausgerichteten Welle (62), an der ein Drehglied (64) drehbar gelagert ist, und mit einer Mehrfachkegel-Synchronschaltkupplung (76) gemäß einem der Ansprüche 7 - 10 zum Verbinden der Welle (62) mit dem Drehglied (64), wobei der Reibringkörper (12) eine erste axiale Stirnseite (42) und eine zweite axiale Stirnseite (44) aufweist, wobei der Reibringkörper (12) im Bereich der ersten axialen Stirnseite (42) einen größeren Außendurchmesser aufweist als im Bereich der zweiten axialen Stirnseite (44), wobei über einen Wellenkanal (102) in der Welle (62) ein Fluid (106) so zugeführt wird, dass das Fluid (106) zumindest teilweise in einen Bereich der ersten axialen Stirnseite (42) des Reibringkörpers (12) gelangt.

12. Wellenanordnung nach Anspruch 11, wobei der Reibring (10) radial außerhalb eines Nabenabschnittes (82) einer Führungsmuffe (80) angeordnet ist und axial zumindest teilweise mit dem Nabenabschnitt (82) der Führungsmuffe (80) ausgerichtet ist.

## Claims

1. Friction ring (10) for a multi-pin synchronous clutch (76) for connecting a shaft (62) to a rotary member (64) which is mounted rotatably on the shaft (62), the friction ring (10) having a friction ring body (12) which defines a longitudinal axis (14) and can be coupled to the shaft (62) or to the rotary member in a rotational direction (16), the friction ring body (12) having a friction ring cone face (20) on a circumferential section (18), which friction ring cone face (20) is configured to pass into frictional engagement with a cone face (26) of a further component (24), the friction ring cone face (20) being oriented at a cone face angle (30) in relation to the longitudinal axis (14), the friction ring (10) having at least one axial fluid guide channel (34; 34'), **characterized in that** the fluid guide channel (34, 34') has a direction of extent (35) which is oriented in relation to the longitudinal axis (14) at a fluid guide channel angle (36) which is oriented in the opposite direction to the cone face angle (30).

2. Friction ring according to Claim 1, **characterized in that** the fluid guide channel (34') has a circumferentially closed bore section in the friction ring body (12).

3. Friction ring according to Claim 1 or 2, **characterized in that** the fluid guide channel (34) has a groove section which is configured on an inner circumferential section (32) of the friction ring body (12).

4. Friction ring according to one of Claims 1 to 3, **characterized in that** the friction ring body (12) has a first axial end side (42) and a second axial end side (44), the fluid guide channel (34; 34') opening into the first axial end side (42) and/or opening into the second axial end side (44).

5. Friction ring according to one of Claims 1 to 4, **characterized in that** the friction ring body (12) has a first axial end side (42) and a second axial end side (44), the friction ring body (12) having a greater external diameter in the region of the first axial end side (42) than in the region of the second axial end side (44), a cross-sectional area of the fluid guide channel (34) increasing along the longitudinal axis (14) towards the second axial end side (44).

6. Friction ring according to one of Claims 1 to 5, **characterized in that** the friction ring (12) has a plurality of fluid guide channels (34) which are arranged distributed over the circumference of the friction ring body (12).

7. Multi-pin synchronous clutch for connecting a shaft (62) which is oriented in a longitudinal axis (14) to a rotary member (64) which is mounted rotatably on the shaft (62), the multi-pin synchronous clutch having a friction ring (10) according to one of Claims 1 to 6.

8. Multi-pin synchronous clutch according to Claim 7, **characterized in that** the friction ring (10) is coupled to the shaft (62) in the rotational direction (16).

9. Multi-pin synchronous clutch according to Claim 8, **characterized by** a synchronizer ring which has a synchronizer ring cone face (98) on a radial inner side, the synchronizer ring (94) being coupled in the rotational direction (16) to a guide sleeve (80) which can be fixed on the shaft (62), and the friction ring (10) being coupled to the synchronizer ring (94) in the rotational direction (16).

10. Multi-pin synchronous clutch according to one of Claims 7 to 9, having
- a guide sleeve (80) which can be connected fixedly to the shaft (62) so as to rotate with it and which has a guide sleeve axial spline system (84),
- a selector sleeve (86) which has a selector sleeve axial spline system (88) which is in engagement with the guide sleeve axial spline system (84) and which is mounted in an axially displaceable manner in relation to the guide sleeve (80),
- a clutch body (90) which can be coupled fixedly to the rotary member (64) so as to rotate with it and has a clutch body axial spline system (92) which can be brought into engagement with the selector sleeve axial spline system (88), in order to connect the rotary member (64) to the shaft (62) in a positively locking manner,
- a synchronizer ring (94) which is coupled to the guide sleeve (80) in the rotational direction and which has a synchronizer ring cone face (98), and
- a cone ring (24) which is coupled to the clutch body (90) in the rotational direction and which has a first cone ring cone face which is in frictional engagement with the synchronizer ring cone face (98), and has a second cone ring cone face (26),
- the friction ring (10) being coupled to the synchronizer ring (94) in the rotational direction (16), the friction ring cone face (20) being in frictional engagement with the second cone ring cone face (26).

11. Shaft arrangement (60) having a shaft (62) which is oriented in a longitudinal axis (14) and on which a rotary member (64) is mounted rotatably, and having a multi-pin synchronous clutch (76) according to one of Claims 7 to 10 for connecting the shaft (62) to the rotary member (64), the friction ring body (12) having a first axial end side (42) and a second axial end side (44), the friction ring body (12) having a greater external diameter in the region of the first axial end side (42) than in the region of the second axial end side (44), a fluid (106) being fed in via a shaft channel (102) in the shaft (62) in such a way that the fluid (106) passes at least partially into the region of the first axial end side (42) of the friction ring body (12).

12. Shaft arrangement according to Claim 11, the friction ring (10) being arranged radially outside a hub section (82) of a guide sleeve (80), and being aligned axially at least partially with the hub section (82) of the guide sleeve (80).

## Revendications

1. Bague de frottement (10) pour un embrayage synchronisé multi-cônes (76) destiné à relier un arbre (62) à un organe rotatif (64) supporté à rotation sur l'arbre (62), la bague de frottement (10) présentant un corps de bague de frottement (12) qui définit un axe longitudinal (14) et qui peut être accouplé dans un sens de rotation (16) à l'arbre (62) ou à l'organe rotatif, le corps de bague de frottement (12) présentant, au niveau d'une portion périphérique (18), une surface conique de bague de frottement (20) qui est réalisée de manière à venir en engagement de frottement avec une surface conique (26) d'un composant supplémentaire (24), la surface conique de bague de frottement (20) étant orientée suivant un angle de surface conique (30) par rapport à l'axe longitudinal (14), la bague de frottement (10) présentant au moins un canal de guidage fluidique axial (34 ; 34'),
**caractérisée en ce que**
le canal de guidage fluidique (34, 34') présente une direction d'étendue (35) qui est orientée, par rapport à l'axe longitudinal (14), suivant un angle de canal de guidage fluidique (36) qui est orienté en sens inverse de l'angle de surface conique (30).

2. Bague de frottement selon la revendication 1, **caractérisée en ce que** le canal de guidage fluidique (34') présente une portion d'alésage fermée sur la périphérie dans le corps de bague de frottement (12).

3. Bague de frottement selon la revendication 1 ou 2, **caractérisée en ce que** le canal de guidage fluidique (34) présente une portion de rainure qui est réalisée au niveau d'une portion périphérique intérieure (32) du corps de bague de frottement (12).

4. Bague de frottement selon l'une quelconque des revendications 1 à 3, **caractérisée en ce que** le corps de bague de frottement (12) présente un premier côté frontal axial (42) et un deuxième côté frontal axial (44), le canal de guidage fluidique (34 ; 34') débouchant dans le premier côté frontal axial (42) et/ou dans le deuxième côté frontal axial (44).

5. Bague de frottement selon l'une quelconque des revendications 1 à 4, **caractérisée en ce que** le corps de bague de frottement (12) présente un premier côté frontal axial (42) et un deuxième côté frontal axial (44), le corps de bague de frottement (12) présentant, dans la région du premier côté frontal axial (42), un plus grand diamètre extérieur que dans la région du deuxième côté frontal axial (44), une surface en section transversale du canal de guidage fluidique (34) augmentant le long de l'axe longitudinal (14) vers le deuxième côté frontal axial (44).

6. Bague de frottement selon l'une quelconque des revendications 1 à 5, **caractérisée en ce que** la bague de frottement (12) présente une pluralité de canaux de guidage fluidiques (34) qui sont répartis sur la périphérie du corps de bague de frottement (12).

7. Embrayage synchronisé multi-cônes destiné à relier un arbre (62) orienté suivant un axe longitudinal (14) à un organe rotatif (64) supporté à rotation sur l'arbre (62), l'embrayage synchronisé multi-cônes présentant une bague de frottement (10) selon l'une quelconque des revendications 1 à 6.

8. Embrayage synchronisé multi-cônes selon la revendication 7, **caractérisé en ce que** la bague de frottement (10) est accouplée à l'arbre (62) dans la direction de rotation (16).

9. Embrayage synchronisé multi-cônes selon la revendication 8, **caractérisé par** une bague de synchronisation qui présente au niveau d'un côté intérieur radial une surface conique de bague de synchronisation (98), la bague de synchronisation (94) étant accouplée dans la direction de rotation (16) à un manchon de guidage (80) qui peut être fixé à l'arbre (62), et la bague de frottement (10) étant accouplée à la bague de synchronisation (94) dans la direction de rotation (16).

10. Embrayage synchronisé multi-cônes selon l'une quelconque des revendications 7 à 9, comprenant
- un manchon de guidage (80) qui peut être connecté de manière solidaire en rotation à l'arbre (62) et qui présente une denture axiale de manchon de guidage (84),
- un manchon de commutation (86) qui présente une denture axiale de manchon de commutation (88) qui est en prise avec la denture axiale de manchon de guidage (84) et qui est supportée de manière déplaçable axialement par rapport au manchon de guidage (80),
- un corps d'embrayage (90) qui peut être connecté de manière solidaire en rotation à l'organe rotatif (64) et qui présente une denture axiale de corps d'embrayage (92) qui peut être amenée en prise avec la denture axiale de manchon de commutation (88) afin de relier l'organe rotatif (64) par engagement par correspondance de formes à l'arbre (62),
- une bague de synchronisation (94) qui est accouplée au manchon de guidage (80) dans la direction de rotation et qui présente une surface conique de bague de synchronisation (98), et
- une bague conique (24) qui est accouplée au corps d'embrayage (90) dans la direction de rotation et qui présente une première surface conique de bague conique qui est engagée par frottement avec la surface conique de bague de synchronisation (98), ainsi qu'une deuxième surface conique de bague conique (26),
- la bague de frottement (10) étant accouplée à la bague de synchronisation (94) dans la direction de rotation (16), la surface conique de bague de frottement (20) étant engagée par frottement avec la deuxième surface conique de bague conique (26).

11. Agencement d'arbre (60) comprenant un arbre (62) orienté suivant un axe longitudinal (14), sur lequel est supporté à rotation un organe rotatif (64) et comprenant un embrayage synchronisé multi-cônes (76) selon l'une quelconque des revendications 7 à 10, pour relier l'arbre (62) à l'organe rotatif (64), le corps de bague de frottement (12) présentant un premier côté frontal axial (42) et un deuxième côté frontal axial (44), le corps de bague de frottement (12) présentant, dans la région du premier côté frontal axial (42), un plus grand diamètre extérieur que dans la région du deuxième côté frontal axial (44), un fluide (106) étant acheminé par le biais d'un canal d'arbre (102) dans l'arbre (62) de telle sorte que le fluide (106) parvienne au moins en partie dans une région du premier côté frontal axial (42) du corps de bague de frottement (12).

12. Agencement d'arbre selon la revendication 11, dans lequel la bague de frottement (10) est disposée radialement à l'extérieur d'une portion de moyeu (82) d'un manchon de guidage (80) et est alignée axialement au moins en partie avec la portion de moyeu (82) du manchon de guidage (80).
